# EUROPÄISCHE PATENTSCHRIFT

(11) **EP 0 580 840 B1**
(45) Veröffentlichungstag und Bekanntmachung des Hinweises auf die Patenterteilung: **20.09.1995**
(21) Anmeldenummer: 93903960.8
(22) Anmeldetag: 12.02.1993
(51) Int. Cl.: F16L 47/00

(54) **ROHRSCHELLE FÜR VERSORGUNGSLEITUNGEN AUS KUNSTSTOFF, INSBESONDERE ANBOHRSCHELLE**
PIPE CLIP FOR PLASTIC SUPPLY DUCTS, IN PARTICULAR TAPPING PIPE CLIP
COLLIER POUR TUYAUX D'ALIMENTATION EN PLASTIQUE, NOTAMMENT COLLIER PERCE-TUYAUX

(30) Priorität: 15.02.1992 DE 4204620
(43) Veröffentlichungstag der Anmeldung: 02.02.1994
(73) Patentinhaber: MANIBS Spezialarmaturen GmbH & Co. KG, D-42859 Remscheid (DE)
(72) Erfinder: SERVE, Klaus, D-42477 Radevormwald (DE)
(74) Vertreter: Mentzel, Norbert, Dipl.-Phys.
(86) Internationale Anmeldenummer: EP9300340
(87) Internationale Veröffentlichungsnummer: WO9316319

(56) Entgegenhaltungen:
- EP-A- 0 173 174
- DE-A- 3 601 615
- DE-U- 8 809 742

## Beschreibung

Die Erfindung richtet sich auf eine Rohrschelle der im Oberbegriff des Anspruches 1 angegebenen Art, die insbesondere als Anbohrschelle benutzt wird. An der gewünschten Stelle der Versorgungsleitung wird eine aus Kunststoff bestehende Schellenoberschale angeschweißt, die einen damit einstückigen Rohrstutzen oder ein T-Rohrstück aufweist. Dann kann im Inneren des Rohrstutzens die Versorgungsleitung angebohrt und verschlossen werden.

Bei der bekannten Rohrschelle dieser Art wurde ein rohrförmiger Metalleinsatz an die Rohrinnenfläche im Rohrstutzen gesetzt, der ein Innengewinde zum Rohrinneren hin aufwies. Dieses Innengewinde wurde zum Einschrauben von Funktionsteilen, wie eines hülsenförmigen Bohrers verwendet, der im Gewindeeingriff mit dem Metalleinsatz stand und an seiner unteren Stirnfläche eine Schneidkante zum Durchtrennen der Rohrwand von der Versorgungsleitung aufwies. Die Handhabung der Funktionsteile im Rohrinneren war umständlich. Der Kunststoff im Bereich des Rohrstutzens zog sich bei Beanspruchungen lang und konnte wegfließen. Außerdem war die Anbindung des Metalleinsatzes am Rohrstutzen bruchgefährdet.

Aus der **DE-3 601 615-A** ist eine Rohrschelle mit einem Rohrstutzen bekannt, in welchem als Metalleinsatz eine Einspritzmutter integriert ist, deren Innengewinde zum Inneren des Rohrstutzens hin frei liegt. In das Mutterngewinde wird ein davon getrennter Rohrnippel mit seinem Außengewinde eingeschraubt. Dieser getrennte Rohrnippel besitzt an seinem nicht im Mutterngewinde befindlichen Oberende Anschlußelemente für Funktionsteile, nämlich ein Innen- und ein Außengewinde.

Die **DE-88 09 742-U** beschreibt ein Übergangsstück zum Verbinden von Kunststoffrohren mit Armaturen oder mit Rohren aus metallischen Werkstoffen. Das Übergangsstück besteht aus einem rohrförmigen Kunststoffkörper, in dessen Rohrraum ein axialer Abschnitt der Messinghülse integriert ist. Lediglich das profilierte Endstück dieses Axialabschnitts ist in den Kunststoff eingelassen, während der übrige Bereich des Axialabschnitts zum Rohrinneren hin frei liegt und nur an seiner Umfangsfläche vom Kunststoff des Übergangsstücks ummantelt ist. Sofern Innengewinde für den Anschluß von Armaturen an der Messinghülse verwendet werden, so erstrecken sich diese auch auf den vom Kunststoff ummantelten Axialabschnitt.

Der Erfindung liegt die Aufgabe zugrunde, eine preiswerte Rohrschelle der im Oberbegriff des Anspruches 1 angegebenen Art zu entwickeln, die bequem handhabbar ist und sich durch große Formbeständigkeit und Festigkeit auszeichnet. Dies wird erfindungsgemäß durch die im Kennzeichen des Anspruches 1 angeführten Maßnahmen erreicht, denen folgende besondere Bedeutung zukommt.

Die Erfindung verwendet als Metalleinsatz ein besonderes einstückiges Gebilde, das in zwei form- und wirkunterschiedliche Axialabschnitt gegliedert ist, von denen der untere Axialabschnitt nachfolgend kurz "Fußabschnitt" und der obere Axialabschnitt "Kopfabschnitt" bezeichnet werden sollen. Während der Fußabschnitt fest im Rohrstutzen verankert ist, ragt der Kopfabschnitt aus dem oberen Stirnende des Rohrstutzens frei heraus und trägt das Innengewinde. Das Innengewinde ist jetzt dem Kunststoff-Rohrstutzen vorgeschaltet und daher für die Handhabung von daran ansetzbaren Funktionsteilen bequem zugänglich. Der Kopfabschnitt kann sich am oberen Stirnende des Rohrstutzens abstützen und dadurch die aufgrund der Handhabung in seinem Bereich anfallenden Kräfte gut auf den nachgeschalteten Rohrstutzen übertragen, in welchem der damit einstückige Fußabschnitt integriert ist. Weil jetzt das Innengewinde dem Rohrstutzen vorgeschaltet ist, kann der Fußabschnitt voll im Kunststoffmaterial in der Rohrwand eingebettet sein. Es liegt ein formschlüssiger Eingriff des Fußabschnitts im Kunststoff des Rohrstutzens vor. Der Fußabschnitt erfüllt damit die Funktion einer den Rohrstutzen versteifenden Armierungshülse. Diese Formschlüssigkeit wird durch radiale Durchbrüche im Fußabschnitt gefördert, die der Kunststoff des Rohrstutzens durchsetzt und daher für eine innige Verbindung zwischen dem zweigliedrigen Metalleinsatz und dem Rohrstutzen sorgt. Es liegt ein hoch belastbarer Material-Verbund vor, der axialen, radialen oder tangentialen Kräften stand hält, die bei bestimmungsgemäßen Gebrauch auf den Kopfabschnitt des Metalleinsatzes einwirken.

Dies ist besonders bedeutungsvoll, wenn die Rohrschelle als sogenanntes "T-Rohrstück" ausgebildet ist, das einen seitlichen Rohrabgang zur Abzweigung einer daran anschließbaren Hausanschlußleitung besitzt. Das T-Rohrstück ist aus Kunststoff einstückig mit der Schellenoberschale ausgebildet und besitzt in seinem oberen Bereich den Rohrstutzen. In diesem T-Rohrstück ist in der genannten Weise der besondere zweigliedrige Metalleinsatz der Erfindung integriert. Sein Kopfabschnitt ragt aus dem oberen Ende des T-Rohrstücks heraus, während sein Fußabschnitt als Armierungshülse sich über die ganze Länge des T-Rohrstücks erstreckt. Dabei sind geeignete Radialdurchbrüche sowohl oberhalb als auch unterhalb des Rohrabgangs angeordnet. Es liegt eine durchgehende Armierung des T-Rohrstücks vor. Der Kunststoff im Bereich des T-Rohrstücks wird von der Armierungshülse formstabil gehalten und fließt nicht weg. Beim Übergang in die Schellenoberschale weist die erfindungsgemäße Rohrschelle radiale Vorsprünge, wie einen Innenbund, auf. Ein solcher Innenbund kann zur Ausbildung oder mindestens Verstärkung eines Ventilsitzes im T-Rohrstück dienen, wenn die Erfindung als Ventilanbohrschelle dient.

Von eigenständiger erfinderischer Bedeutung ist es, der Rohrschelle eine Abdeckhaube aus Kunststoff zuzuordnen, welche die aus dem Rohrstutzen herausragenden Bereiche der dort montierten Funktionsteile verkapselt, mit ihrer die Haubenöffnung umschließenden Randzone den Umfangsbereich des Rohrstutzens übergreift und dort angeschweißt ist. Durch diese Verkapselung wird ein idealer Korrosionsschutz erreicht. Man spart das umständliche Setzen eines Schrumpfschlauches. Bei Funktionsteilen, die im Rohrstutzen bzw. im T-Rohrstück endgültig verbleiben können, wie Ventilbohreinrichtungen mit Fräser, wird die Kunststoff-Abdeckhaube bereits herstellerseitig über den in der Rohrschelle gesetzten Funktionsteil gestülpt und an seinem Rohrstutzen bzw. T-Rohrstück angeschweißt. Das erleichtert die Handhabung der Rohrschelle für den Abnehmer. In allen anderen Fällen erfolgt dies abnehmerseitig, nachdem der endgültige Funktionsteil, wie ein Ventilglied oder Verschlußstopfen, gesetzt worden sind.

Im Scheitelbereich kann die Abdeckhaube mit einem Axialdurchbruch versehen sein, der eine Abschlußblende im Scheitelbereich erzeugt. Durch eine solche Blendenöffnung wird dann das Betätigungsende eines im Inneren des Rohrstutzens bzw. T-Rohrstücks gesetzten Funktionsteils hindurchgeführt, wie eine Drehhandhabe eines Ventilglieds, eines Anbohrglieds od. dgl.. Besondere Bedeutung gewinnt die Abdeckhaube, wenn bei einer Rohrschelle der vorerwähnte, im Anspruch 1 angeführte zweigliedrige Metalleinsatz verwendet wird. In diesem Fall ummantelt die Abdeckhaube mit ihrer Mittelzone den am Stirnende des Rohrstutzens bzw. des T-Rohrstücks herausragenden Kopfabschnitt, während die vorerwähnte Haubenrandzone erst im angrenzenden Umfangsbereich angeschweißt ist, wo der Fußabschnitt als Armierungshülse im angrenzenden Rohrstutzen bzw. T-Rohrstück verläuft.

Weitere Maßnahmen und Vorteile der Erfindung ergeben sich aus den Unteransprüchen, der Beschreibung und den Zeichnungen. In den Zeichnungen ist die Erfindung in mehreren Ausführungsbeispielen dargestellt. Es zeigen:
- Fig. 1, 2 und 3: einen Längsschnitt, eine Seitenansicht und eine teilweise ausgebrochene Draufsicht auf ein erstes Ausführungsbeispiel eines in zwei Abschnitte gegliederten Metalleinsatzes für eine erste Ausführung einer erfindungsgemäßen Rohrschelle,
- Fig. 4: in einem der Fig. 1 entsprechenden Längsschnitt den oberen Bereich eines ersten Ausführungsbeispiels der erfindungsgemäßen Rohrschelle, die als T-Rohrstück ausgebildet und mit dem Metalleinsatz von Fig. 1 bis 3 ausgerüstet ist,
- Fig. 5: eine der Rohrschelle von Fig. 4 zugeordnete Abdeckhaube im Längsschnitt,
- Fig. 6: eine Unteransicht der in Fig. 4 gezeigten Schellenoberschale,
- Fig. 7: in einem der Fig. 4 entsprechenden Axialschnitt die an einer Versorgungsleitung angeschlossene komplette Rohrschelle mit einem darin montierten Ventilglied sowie einer daran befestigten Abdeckhaube nach Fig. 5,
- Fig. 8 und 9: in einer der Fig. 4 entsprechenden Darstellung zwei weitere alternative Ausführungsformen des oberen Bereiches einer erfindungsgemäßen Rohrschelle,
- Fig.10: eine komplette, mit dem Bauteil von Fig. 9 versehene Rohrschelle nach der Erfindung, in deren T-Rohrstück einerseits eine Ventilbohreinrichtung gesetzt und andererseits die Abdeckhaube gemäß Fig. 5 befestigt sind,
- Fig.11 und 12: in einem der Fig. 1 entsprechenden Längsschnitt zwei weitere Ausführungsformen eines zweigliedrigen Metalleinsatzes für eine weitere abgewandelte Ausführungsform einer Rohrschelle nach der Erfindung,
- Fig.13: in einer der Fig. 5 entsprechenden Darstellung einen Längsschnitt durch eine abgewandelte Ausführungsform einer Abdeckhaube,
- Fig.14: in einer der Fig. 4 entsprechenden Darstellung den oberen Bereich einer weiteren abgewandelten Ausführung der erfindungsgemäßen Rohrschelle, die lediglich einen einfachen Rohrstutzen aufweist,
- Fig.15: in einer der Fig. 14 entsprechenden Ansicht die komplette Rohrschelle mit der in Fig. 14 gezeigten Ausführung und
- Fig.16: eine zur Fig. 14 alternative Ausbildung des oberen Bereichs der Rohrschelle mit dem gemäß Fig. 12 modifizierten zweigliedrigen Metalleinsatz.

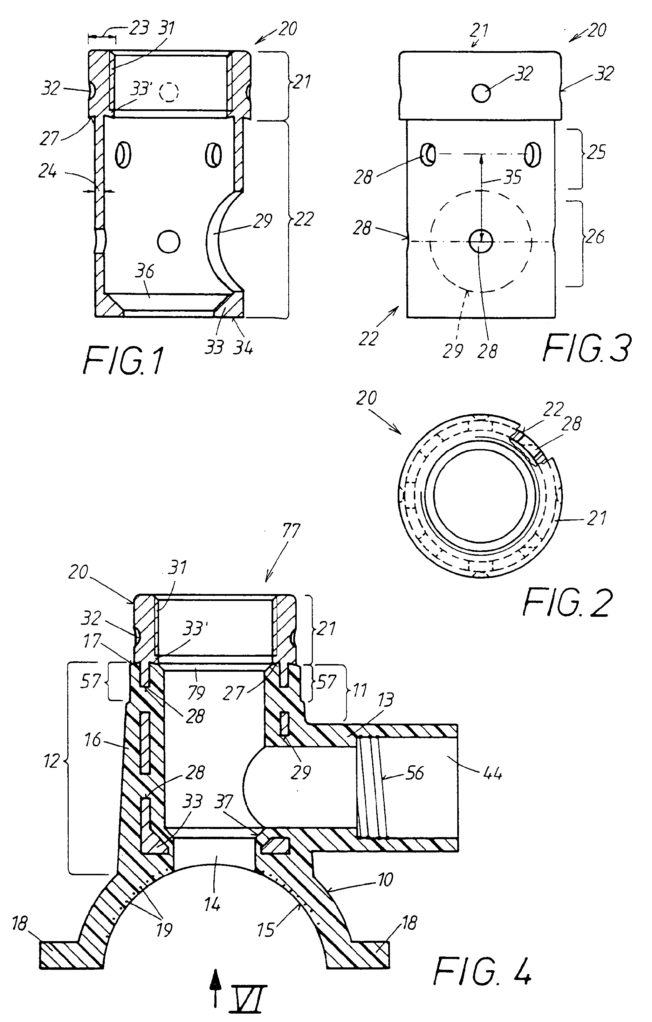

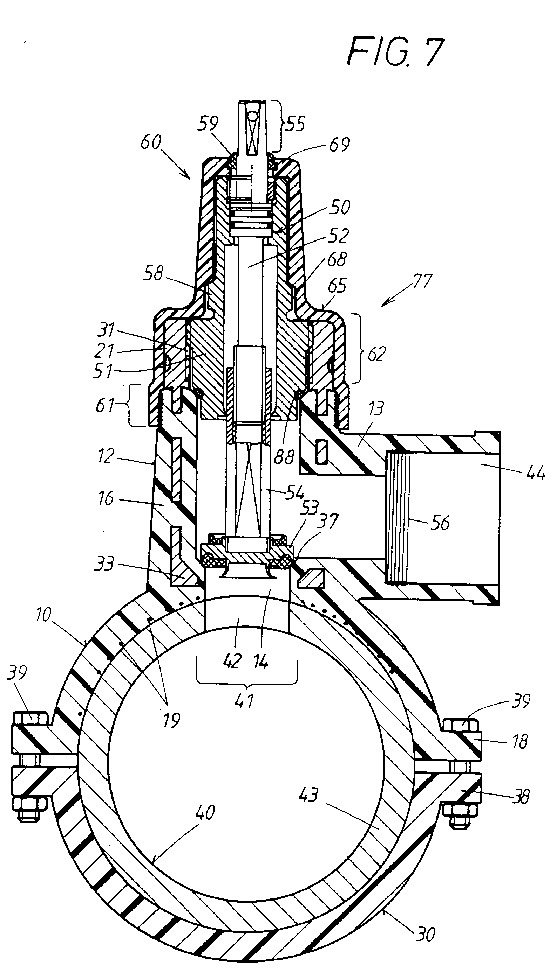

Die erfindungsgemäße Rohrschelle besteht aus einer Schellenoberschale 10 aus Kunststoff sowie aus einer zweckmäßigerweise ebenfalls aus Kunststoff gebildeten Unterschale 30, die, wie aus Fig. 7 zu erkennen ist, an einer gewünschten Stelle 41 einer aus Kunststoff bestehenden Versorgungsleitung 40 fest montiert werden sollen. Die Kunststoff-Versorgungsleitung 40 dient zur Leitung von unter höherem Druck stehenden Medien, wie Gas, Wasser od. dgl.. In der Praxis entsteht nun das Bedürfnis, an dieser Stelle 41 der bereits fertig verlegten, unter Mediendruck stehenden Versorgungsleitung 40, nachträglich Leitungsanschlüsse vorzusehen. Dann kommt es darauf an, an dieser Stelle 41 die Leitungswand 43 mit einer Bohrung 42 zu versehen, an der die zum Bohren benötigten Funktionsteile gesetzt werden können, die spätestens nach Setzen des endgültigen Funktionsteils die Bohrung 42 mediendicht abzuschließen gestattet. Diese Aufgabe übernimmt die erfindungsgemäße Anbohrschelle, die, als Ventilanbohrschelle 77, in folgender, aus Fig. 1 bis 7 ersichtlicher besonderer Weise gestaltet ist.

Hier ist die aus Kunststoff gebildete Oberschale 10 einstückig mit einem T-Rohrstück 12 versehen, das einen seitlichen Rohrabgang 13 aufweist. Oberhalb dieses Rohrabgangs 13 läuft das T-Rohrstück in einem kurzen Rohrstutzen 11 weiter. Das T-Rohrstück 12 mündet mit einer zentralen Bohrung 14 an der Innenfläche 15 der Schellenoberschale 10 aus. In den Rohrstutzen 12 ist ein besonderer rohrförmiger Metalleinsatz 20 integriert, dessen Aufbau aus den Fig. 1 bis 3 zu entnehmen ist.

Der Metalleinsatz 20 besteht aus zwei formunterschiedlichen Axialabschnitten 21, 22, die zueinander unterschiedliche Wandstücke 23, 24 aufweisen. Diese Axialabschnitte 21, 22 sind aber auch wirkunterschiedlich, wie ihr Einbau in Fig. 4 zeigt. Der mit einer dünnen Wandstärke 24 ausgerüstete untere Axialabschnitt 22 ist, wie aus Fig. 4 erkennbar ist, in den Kunststoff 16 des T-Rohrstücks 12 integriert, weshalb er mit dem bereits eingangs erwähnten Begriff "Fußabschnitt" bezeichnet werden soll. Demgegenüber ragt der andere Axialabschnitt 21 aus dem vom Rohrstutzen 11 bestimmten Endbereich des T-Stücks 12 axial heraus, weshalb für ihn die ebenfalls bereits genannte Bezeichnung "Kopfabschnitt" verwendet werden soll. Der Kopfabschnitt 21 ist mit einer wesentlich dickeren Wandstärke 23 versehen, die sich zweckmäßigerweise, wie aus Fig. 1 erkennbar ist, sowohl gegenüber der Innen- als auch der Außenfläche der dünnen Wand 24 des Fußabschnitts 22 absetzt ist. Dadurch entsteht am Übergang zwischen dem Kopf- und Fußabschnitt 21, 22 ein Absatz 27, der sich bei der fertigen Rohrschelle, wie aus Fig. 4 zu entnehmen ist, am freien Stirnende 17 des dortigen Rohrstutzens 11 abstützt.

Der Fußabschnitt 22 ist inmitten des Kunststoffes 16 vom T-Rohrstück 12 eingebettet und erstreckt sich über dessen ganze Länge. Der Fußabschnitt 22 besitzt ferner mehrere Radialdurchbrüche 28, die bei fertiger Rohrschelle von dem Kunststoff 16 des T-Rohrstücks 12 durchsetzt werden, wie aus Fig. 4 zu entnehmen ist. Die Radialdurchbrüche 28 sind dabei gruppenweise in zwei Axialzonen 25, 26 angeordnet, die in einem definierten Höhenabstand 35 zueinander liegen. Wie ein Vergleich mit Fig. 4 zeigt, befinden sich die in der oberen Axialzone 25 befindlichen Radialdurchbrüche 28 im wesentlichen in der Höhenmitte des endseitigen Rohrstutzens 11 oberhalb des abzweigenden Rohrabgangs 13, während die Radialdurchbrüche 28 der unteren Axialzone 25 im Höhenbereich des Rohrabgangs 13 angeordnet sind. Gemäß Fig. 1 und 3 liegt in dieser unteren Axialzone 26 auch eine Radialöffnung 29 mit einem die lichte Weite des Rohrabgangs 13 übersteigenden Öffnungsdurchmesser. Die Radialöffnung 29 umschließt die Ansatzstelle des Rohrabgangs 13 am T-Rohrstück 12, wie aus Fig. 4 zu ersehen ist. Die Radialöffnung 29 und die Radialdurchbrüche 28 der unteren Axialzone 26 können sogar exakt höhengleich positioniert sein. Daraus ergibt sich die besondere Funktion des Fußabschnitts 22, als Armierungshülse des T-Rohrstücks 12 zu dienen, die mit ihm allseitig formschlüssig in Eingriff steht.

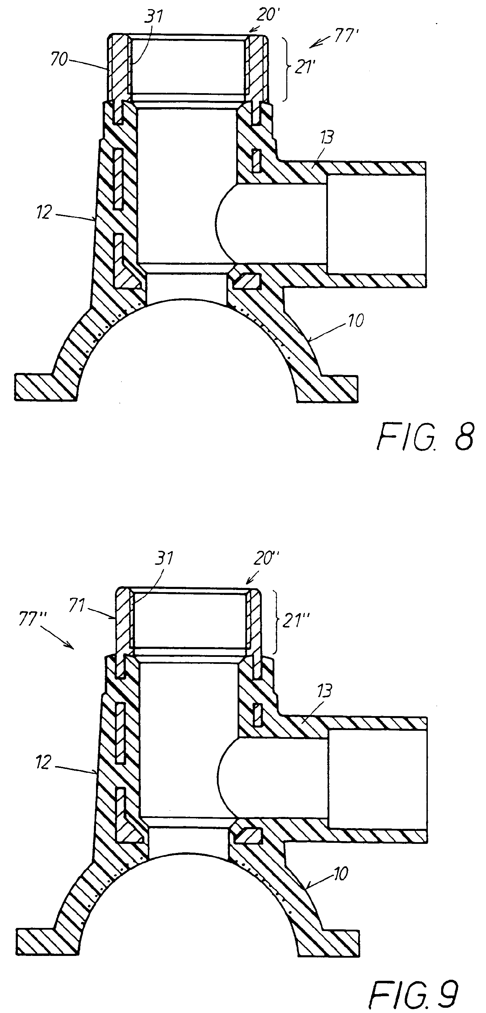

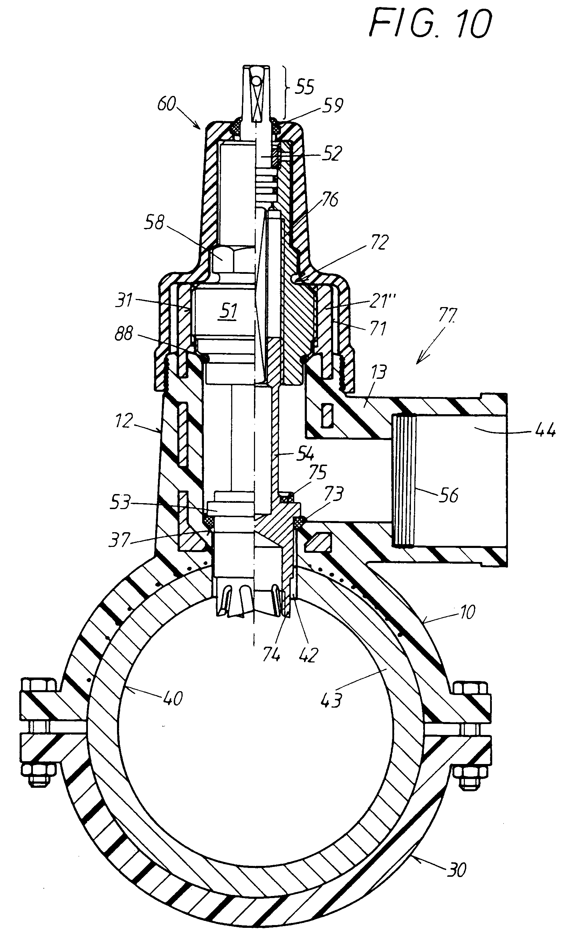

Nach der Einbettung des Fußabschnitts 22 im Kunststoff 16 des T-Rohrstücks 12 dient der dickwandige, axial herausragende Kopfabschnitt 21 des zweigliedrigen Metalleinsatzes 20 zum Anschluß von beliebigen Funktionsteilen, welche die Rohrschelle Bestandteil einer Rohrarmatur werden lassen. Im Ausführungsbeispiel von Fig. 7 ist dies ein Ventilglied 50. Dazu besitzt der Kopfabschnitt 21 ein Innengewinde 31. Auf der Umfangsfläche des Kopfabschnitts 21 sind Anschlußmöglichkeiten für ein Schleusengerät od. dgl. vorgesehen, wofür im vorliegenden Fall radiale Kupplungsaufnahmen 32 vorgesehen sind. Diese liegen bei fertigem Verbund aus Metalleinsatz 20 und T-Rohrstück 12, wie aus Fig. 4 hervorgeht, frei. Dazu kann es auch alternative Ausführungen geben, die später im Zusammenhang mit Fig. 8 und 9 näher beschrieben werden.

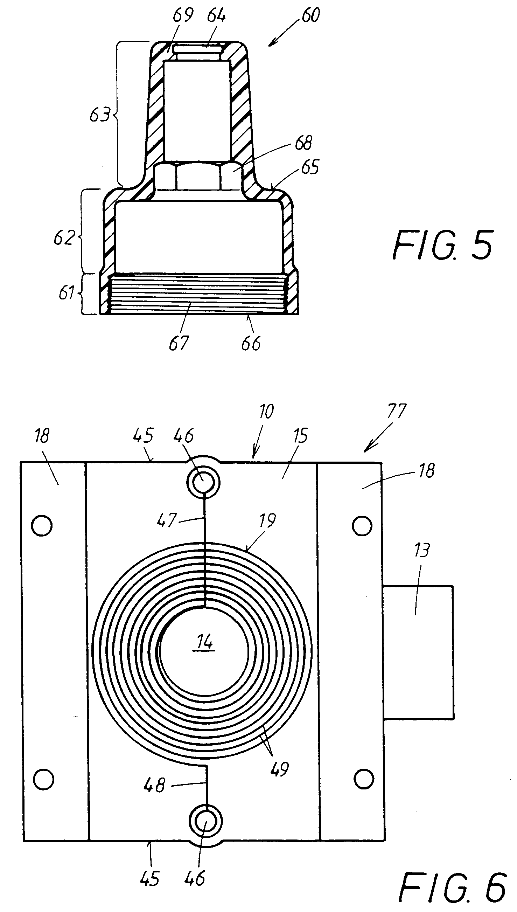

Die Ventilanbohrschelle 77, gemäß Fig. 7, wird aus ihrer Ober- und Unterschale 10, 30 zusammengebaut. Dazu besitzen die Unter- und Oberschale 10, 30 Randflansche 18, 38 mit Durchführungen für Spannschrauben 39 od. dgl.. Wie aus der Innenansicht in Fig. 6 der Oberschale 10 zu ersehen ist, ist an der Schaleninnenfläche 15 ein besonderer Heizleiter 19 angeordnet, der zur Schweißverbindung der montierten Oberschale 10 an der Versorgungsleitung 40 dient. Der Heizleiter ist hier als Heizspirale 19 ausgebildet und in zahlreichen Spiralwindungen 49 um die vorerwähnte zentrale Bohrung 14 für das T-Rohrstück 12 herumgelegt. Die beiden Leitungsenden 47, 48 verlaufen radial zum Spiralverlauf und enden an zwei elektrischen Kontaktstellen 46. Diese Kontaktstellen 46 befinden sich an den einander gegenüberliegenden Zylinderenden 45 der Oberschale 10 und daher einer besonders bequemen Handhabung zugänglich. Durch den spiralförmigen Verlauf 49 des Heizleiters 19 findet die Erwärmung längs derjenigen Linien statt, die für eine mediendichte Verbindung des Übergangsbereichs zwischen der schellenseitigen zentralen Bohrung 14 einerseits und dem Bohrloch 42 in der Leitungswand 43 der Versorgungsleitung 40 gemäß Fig. 7 andererseits maßgeblich sind. Die so gemäß Fig. 7 montierte Rohrschelle ist bereit, wahlweise mit den benötigten Funktionsteilen bestückt zu werden.

Durch den besonderen erfindungsgemäßen Verbund des Metalleinsatzes 20 mit dem T-Rohrstück 12 gewinnt die erfindungsgemäße Oberschale 10 im Bereich des Kopfabschnitts 21 ein Aussehen, wie es beim üblichen metallischen T-Rohrstück bekannt ist, welches durch Schweißverbindung an einem metallischen Rohr einer Versorgungsleitung befestigt worden ist. Daher können am Kopfabschnitt 21 in bekannter Weise jene Funktionsteile benutzt werden, wie sie bei metallischen T-Rohrstücken vorbekannt sind. So ist es beispielsweise möglich, im Umfangsbereich des Kopfabschnitts 21 das bereits erwähnte Schleusengerät zu setzen, an welchem eine Bohreinrichtung, eine Blasensetzeinrichtung zum Verschließen der Versorgungsleitung 40, eine Ventilsetzeinrichtung oder eine Stopfensetzeinrichtung montiert werden können. Dazu nutzt man im vorliegenden Fall die erwähnten Kupplungsaufnahmen 32. Der Kopfabschnitt 21 kann aber unter Benutzung der Kupplungsaufnahmen 32 auch zur unmittelbaren Anbringung eines Anbohrgeräts benutzt werden, was später im Zusammenhang mit Fig. 10 noch näher beschrieben wird. Gleichgültig, in welcher Verfahrensweise vorgegangen wird, schneidet man zunächst im Inneren der gesetzten Anbohrschelle 77 das Bohrloch 42 in die Leitungswand 43 ein. Danach wird in das noch frei zugängliche Innengewinde 31 des Kopfabschnitts 21 ein endgültiger Funktionsteil gesetzt, nämlich im Falle der Fig. 7 das bereits erwähnte Ventilglied 50 mit dessen einen Außengewindeabschnitt umfassenden Ventiloberteil 51. Der bundartige Gewindeabschnitt des Ventiloberteils 51 stützt sich über einen Dichtring 88 an einer Innenschulter 79 am Stirnende 17 des endseitigen Rohrstutzens 11 gemäß Fig. 4 ab. Im Ventiloberteil 51 ist durch übliche Dichtringe eine abgedichtete Ventilspindel 52 und ein den Ventilteller 53 aufweisender Ventilschaft 54 angeordnet. Aus dem eingeschraubten Ventiloberteil 51 schaut die Ventilspindel 52 mit ihrer Drehhandhabe 55 heraus. Der Verbund aus dem Metalleinsatz 20 und dem T-Rohrstück 12 dient im vorliegenden Fall als Ventilgehäuse. Dazu ist der integrierte Fußabschnitt 22 vom Metalleinsatz 20 in besonderer Weise profiliert.

Im vorliegenden Fall besitzt, wie aus Fig. 1 zu entnehmen ist, der Fußabschnitt 22 einen nach innen weisenden Radialvorsprung, der ein gleichförmiges Ringprofil aufweist und dadurch einen unterbrechungsfreien Innenbund 33 erzeugt. Dieser befindet sich hier am Innenende 34 des Fußabschnitts 22, der dem Kopfabschnitt 21 gegenüberliegt und eine konische Innenfläche 36 erzeugt. Bei fertigem Verbund befindet sich der Innenbund 33 an der Übergangsstelle des T-Rohrstücks 12 zu seiner Oberschale 10, und zwar in jenem Bereich, wo die das Rohrstück-Innere formenden Kunststoffmassen 16 einen aus Fig. 7 erkennbaren Ventilsitz 37 für den Ventilteller 53 erzeugen. Durch Betätigung der Drehhandhabe 55 wird infolge Ausschubs des Ventilschafts 52 von der Ventilspindel 54 der Ventilteller 53 axial nach unten geschraubt und stößt auf den Ventilsitz 37, der durch den Innenbund 33 wesentlich verstärkt wird. Der vorerwähnte Innenkonus 36 des Innenbunds 33 unterstützt das entsprechend konische Profil des Ventilsitzes 37. Anstelle eines Innenbundes könnten auch andere Radialvorsprünge im Fußabschnitt 22 vorgesehen sein, die bedarfsweise auch nach außen gerichtet sein könnten. Solche Radialvorsprünge brauchten auch nicht Ringform aufweisen, sondern könnten in sich ein ungleichförmges Umfangsprofil in Form von Zähnen od. dgl. erzeugen. Dies wäre der Einbettung des Fußabschnittes 22 im Kunststoff 16 des T-Rohrstücks 12 förderlich.

Wie bereits erwähnt wurde, dient der Rohrabgang 13 des T-Rohrstücks 12 zur Montage einer nicht näher gezeigten Hausanschlußleitung. Dazu ist der Rohrabgang 13 im Endbereich als Anschlußmuffe 44 ausgebildet, in deren Innerem ein elektrischer Heizleiter 56 angeordnet ist, der für eine Schweißverbindung sorgt. Es sind auch andere Anschlußmöglichkeiten denkbar. Das mit dem Ventilglied 50 gemäß Fig. 7 ausgerüstete Anbohr-T-Stück kann nun noch in besonderer Weise verkapselt werden.

Zur Verkapselung verwendet man die in Fig. 5 gezeigte besondere Abdeckhaube 60. Die Abdeckhaube 60 besteht aus Kunststoff, ist zwar, von außen gesehen, rotationssymmetrisch ausgebildet, aber in sich abschnittweise gestuft. Die Abdeckhaube 60 hat an ihrer die Haubenöffnung 66 umschließenden Randzone 61 die größte lichte Weite und ist innenflächig mit einer Heizwendel 67 versehen. Diese Haubenrandzone 61 hat eine lichte Weite, die dem oberen Umfangsbereich 57 des zum T-Rohrstück 12 gehörenden Rohrstutzens 11 angepaßt ist und daher dort die aus Fig. 7 ersichtliche Schweißverbindung erfährt. Die Wirksamkeit der Heizwendel 67 kann mit dem gleichen Gerät und ggf. zur gleichen Zeit wie die Schweißverbindung im Bereich der Heizwendel 56 im Bereich des Rohrabgangs 13 und/oder der Heizspirale 19 im Bereich der Oberschale 10 ausgeführt werden. Der für das Verschweißen maßgebliche, aus Fig. 4 ersichtliche Umfangsbereich 57 am Rohrstutzen 11 schließt sich unmittelbar an den herausragenden Kopfabschnitt 21 des Metalleinsatzes 20 an und ist durch ein geeignetes äußeres Längsprofil gegenüber dem T-Rohrstück abgesetzt. Dieser Umfangsbereich 57 könnte für die Schweißzwecke besonders präpariert sein.

An die schweißbare Haubenrandzone 61 schließt sich eine gestufte Haubenmittelzone 62 an, die über eine Stufe 65 in eine Haubenkuppe 63 übergeht. Im Montagefall, gemäß Fig. 7, ummantelt die Haubenmittelzone 62 die Umfangsfläche des Kopfabschnitts 21 und die Stufe 65 kommt vor dem freien Stirnende des Kopfabschnitts 21 zu liegen. An dieser Stelle endet auch der bundförmige Gewindeabschnitt des Ventiloberteils 51, womit auch dessen Absatzfläche von der Stufe 65 hintergriffen wird. Die Haubenkuppe 63 umschließt den abgesetzten Bereich des Ventiloberteils 51 und besitzt an der Übergangsstelle zur Stufe 65 eine unrunde Aufnahme 68, welche die Negativform eines Sechskantprofils einer Mutter ist und aus Fig. 5 hervorgeht. Im Montagefall von Fig. 7 kommt der Ventiloberteil 51 mit der positiven Form seiner mutterförmigen Sechskanthandhabe 58 in diesem Bereich zu liegen. Dadurch ist der Ventiloberteil 51 formschlüssig mit der Abdeckhaube 60 in Eingriff, wodurch die im Sechskantprofil 68 befindliche Handhabe 58 für eine verdrehungssichere Halterung des Ventilglieds 50 im T-Rohrstück 12 sorgt. Die Haubenkuppe 63 hintergreift mit ihrem Scheitelbereich das Stirnende des Ventiloberteils 51 und besitzt dort einen aus Fig. 5 erkennbaren Axialdurchbruch 64, der dort eine Abschlußblende 69 erzeugt. Der Axialdurchbruch erzeugt eine Blendenöffnung 64, durch welche die Drehhandhabe 55 im Montagefall von Fig. 7 herausragt. Das Innere der Blendenöffnung 64 ist profiliert und dient zur Aufnahme eines konischen Dichtungsrings 59, der sich mediendicht um die Drehhandhabe 55 legt.

In Fig. 8 und 9 sind in einem der Fig. 4 entsprechenden Axialschnitt zwei alternative Ausführungsformen des oberen Teils einer Ventilanbohrschelle 77′ und 77˝ gezeigt, die einen gegenüber Fig. 4 abgewandelten Metalleinsatz 20′ bzw. 20˝ im T-Rohrstück 12 aufweisen. Es genügt, lediglich auf die Unterschiede dieser Metalleinsätze 20′, 20˝ einzugehen, weil in übriger Hinsicht die bisherige Beschreibung gilt. Die Unterschiede bestehen im wesentlichen in einer anderen Ausbildung des axial herausragenden Kopfabschnitts 21′, 21˝.

Im Falle der Fig. 8 ist der Kopfabschnitt 21′ an seiner Umfangsfläche mit einem Außengewinde 70 versehen, welches anstelle der in Fig. 4 beschriebenen Kupplungsaufnahmen 32 zum Anschluß von weiteren Funktionsteilen, wie einer Bohreinrichtung, einer absperrbaren Schleuse od. dgl., dient. Im Falle der Fig. 9 ist der entsprechende freiliegende Kopfabschnitt 21˝ des dortigen Metalleinsatzes 20˝ mit einer glatten Umfangsfläche 71 versehen. Eine solche mit dem T-Rohrstück 12 ausgerüstete Oberschale 10 ist der Oberteil einer Ventilanbohrschelle 77′, 77˝, das z. B. zur Montage eines aus Fig. 10 ersichtlichen Anbohrglieds 72 verwendet wird. Zur Benennung der diversen Bestandteile des in der Ventilanbohrschelle 77˝ von Fig. 10 montierten Ventilanbohrglieds 72 sind die gleichen Bezugszeichen wie beim Ventilglied 50 von Fig. 7 verwendet, weshalb insoweit die bisherige Beschreibung gilt. Es genügt, lediglich auf die Unterschiede einzugehen.

Das Ventilanbohrglied 72 ist mit seinem Ventiloberteil 51 herstellerseitig bereits in dem Innengewinde 31 des dortigen Kopfabschnitts 21˝ eingeschraubt. Die Ventilspindel 52 trägt nicht nur den Ventilteller 73, sondern ist unterhalb seiner unteren Tellerdichtung 73 mit einem einstückigen Fräser 74 versehen. Bei Lieferung der Ventilanbohrschelle von Fig. 10 ist das montierte Ventilanbohrglied 72 bereits werkseitig mittels der vorbeschriebenen Abdeckhaube 60 verkapselt. Die erfindungsgemäß gestaltete Ventilanbohrschelle 77˝ und das Anbohrglied 72 bilden zusammen mit der Abdeckhaube 60 eine vormontierte Baueinheit, die ein vom Hersteller in den Handel gebrachtes Produkt bilden. Es ergeben sich die im Zusammenhang mit Fig. 7 bereits beschriebenen Hintergriffe und Drehsicherungen zwischen der mehrfach gestuften Abdeckhaube 60 und dem Ventiloberteil 51. Der am Ventilteller 53 befindliche Fräser 74 befindet sich dann allerdings zunächst in einer gegenüber Fig. 10 entgegengesetzten, oberen Schraubstellung, wo die obere Tellerdichtung 75 an der inneren Stirnfläche des Ventiloberteils 51 anliegt. Das Oberende des Ventilschafts 54 steht mit einem hier im Ventiloberteil 51 befindlichen Innengewinde 76 in Eingriff, welches eine geringe Steigung aufweist, um ein manuelles Anbohren zu ermöglichen. Durch Drehen der aus der Kappe herausragenden, ebenfalls abgedichteten Handhabe 55 der Spindel 52 wird der Fräser 40 gegen die an der Verbindungsleitung 40 befestigte Ober- und Unterschale 10, 30 bewegt. Dadurch schneidet der Fräser 74 sich das Bohrloch 42 in der Leitungswand 43 selbst. Fig. 10 zeigt die andere Schraubstellung, wo schließlich die untere Tellerdichtung 73 am Ventilschaft 54 abdichtend am bereits beschriebenen Ventilsitz 37 zur Anlage gebracht ist. Der Rohrabgang 13 ist abgesperrt. Durch Verwendung des in der dortigen Anschlußmuffe 44 vorgesehenen, bereits beschriebenen Heizleiters 56 läßt sich eine Hausanschlußleitung anschließen. Dann kann durch Drehen der Handhabe 55 der Ventilteller 53 von seinem Sitz 37 wieder gelüftet werden. Die Abdeckhaube 60 umgreift dabei mit ihrem bereits im Zusammenhang mit Fig. 5 beschriebenen Mutternprofil 68 die am Ventiloberteil 51 einstückig angeformte Sechskanthandhabe 58 und nimmt Drehmomente auf, die ein unerwünschtes Herausschrauben des ganzen Ventilanbohrglieds 72 aus dem T-Rohrstück 12 verhindern.

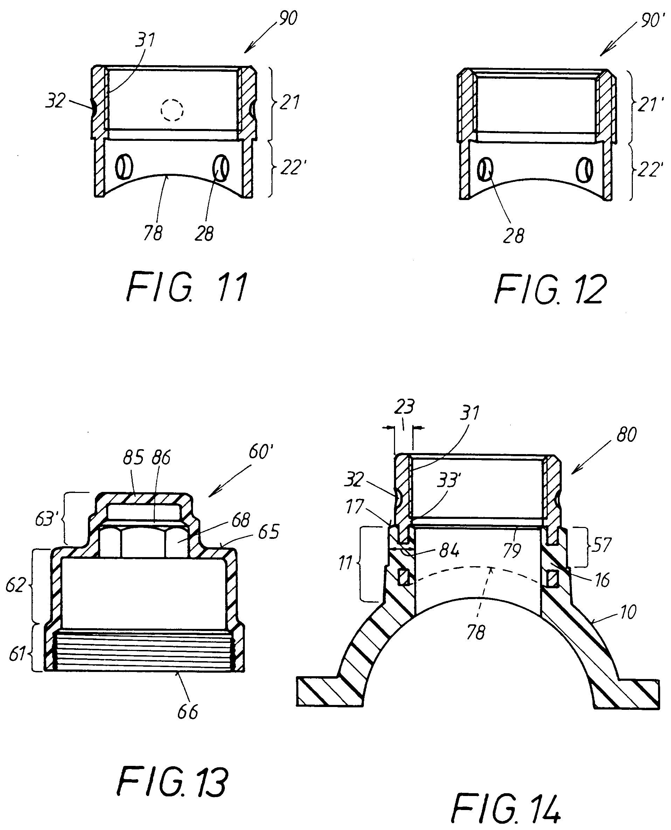

In den Fig. 11 bis 16 ist eine Anbohrschelle 80, 80′ in zwei Ausführungsbeispielen mit seinen verschiedenen Bestandteilen gezeigt, die analog zu der vorbeschriebenen Ventilanbohrschelle 77, 77′, 77˝ der vorausgehenden Fig. gestaltet sind, aber nicht zum Setzen von Hausanschlußleitungen, sondern zum Setzen von Blasen- oder Preßkolben in der Versorgungsleitung 40 und Absperren der Versorgungsleitung 40 dienlich ist. Die Bauteile der Anbohrschelle 80, 80′ sind zwar gegenüber der vorbeschriebenen Ventilanbohrschelle 77 bis 77˝ abgewandelt, doch sollen zur Benennung entsprechender Bauteile die gleichen Bezugszeichen verwendet werden, weshalb insoweit die bisherige Beschreibung gilt.

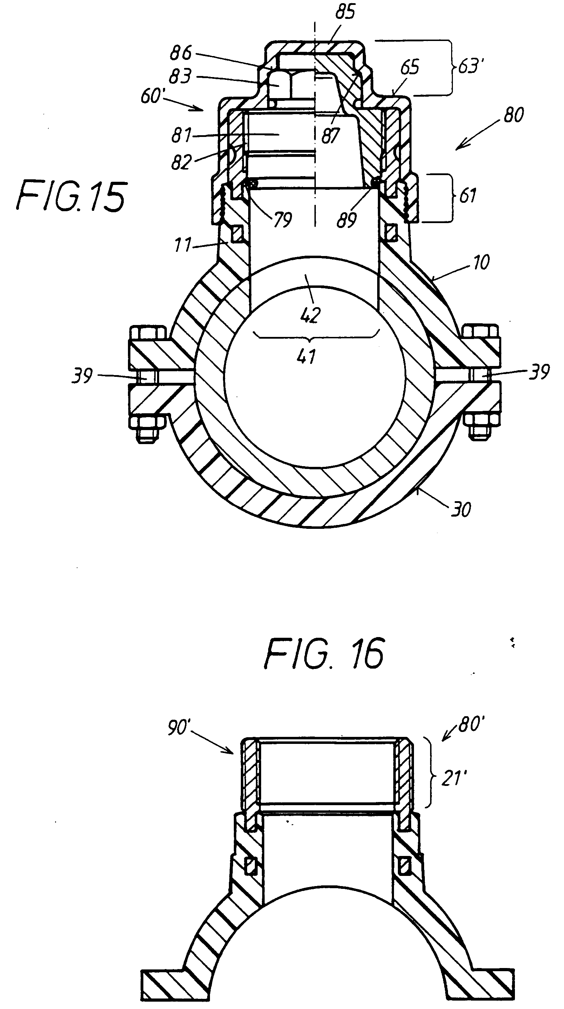

Beim ersten Ausführungsbeispiel der Anbohrschelle 80 gemäß Fig. 15 wird zwar ebenfalls eine Unterschale 30 und eine Oberschale 10 an der maßgeblichen Stelle 41 einer Versorgungsleitung 40 gesetzt, doch befindet sich der Rohrstutzen 11 unmittelbar an der Oberschale 10, wie aus Fig. 14 zu entnehmen ist. In den Kunststoff 16 ist dabei der besondere, aus Fig. 11 ersichtliche Metalleinsatz 90 integriert, der zwar den bereits im Zusammenhang mit Fig. 1 bis 7 beschriebenen Kopfabschnitt 21 aufweist, aber mit einem demgegenüber kürzeren Fußabschnitt 22′ versehen ist. Der Fußabschnitt 22′ besitzt eine geschweifte Unterkante 78, welche die spätere Wölbung der Oberschale 10 berücksichtigt und in ihrem Verlauf in Fig. 14 angedeutet ist. Darüber hinaus sind im Fußabschnitt 22′ aber auch noch die bereits beschriebenen Radialdurchbrüche 28 vorgesehen, die beim Spritzgußvorgang vom Kunststoff 16 im Bereich des Rohrstutzens 11 durchströmt werden und daher zu der bereits beschriebenen innigen Verbindung mit dem Metalleinsatz führen. Im Ausführungsbeispiel von Fig. 11, 14 und 15 ist der Kopfabschnitt 21 des Metalleinsatzes 90 mit den bereits beschriebenen Kupplungsaufnahmen 32 für ansetzbare Funktionsteile, wie Anbohreinrichtungen, Schleusen od. dgl. vorgesehen.

Fig. 15 zeigt eine endgültige Gebrauchsmöglichkeit dieser Anbohrschelle 80 im Zusammenhang mit einem im Innengewinde 31 eingeschraubten Verschlußstopfen 81. Vorausgehend ist über ein Anbohrgerät das Bohrloch 42 in die Versorgungsleitung 40 eingeschnitten worden. Dadurch konnte ein Zugang zum Inneren der Versorgungsleitung 40 gefunden werden, um diese bedarfsweise mittels der bereits erwähnten Blasensetzgeräte oder Preßkolben zu verschließen. Der Verschlußstopfen 81 soll nun das im Inneren der gesetzten Anbohrschelle 80 befindliche Bohrloch 42 endgültig abschließen. Dazu wird der Verschlußstopfen 81 mit seinem Außengewinde 82 eingeschraubt, bis er im Bereich des Kopfabschnitts 21 an einem in Fig. 11 und 14 verdeutlichten Innenbund 33′ zur Anlage kommt, der das dortige Innengewinde 31 begrenzt. Ein solcher Innenbund 33′ ist auch beim ersten Ausführungsbeispiel gemäß Fig. 1 und 4 vorgesehen. Die Handhabung des Verschlußstopfens 81 erfolgt durch eine an ihm endseitig angeformte Sechskanthandhabe 83, die lage- und formmäßig der im ersten Ausführungsbeispiel beschriebenen Handhabe 58 am dortigen Ventilglied 50 entspricht. In der in Fig. 15 beschriebenen Einschraublage kommt ein in einer Umfangsnut des Verschlußstopfens 81 positionierter Dichtungsring 89 an jener Innenschulter 79 des Rohrstutzens 11 zur Anlage, die durch die innere, in Fig. 14 erkennbare Absatzfläche zustande kommt. Diese Absatzfläche 79 ergibt sich aus der gegenüber der Wandstärke 23 des Kopfabschnitts 21 größeren Rohrstutzenstärke 84 gemäß Fig. 14. Diese Innenschulter 79 bleibt also als Absatz im Bereich des oberen Stirnendes des Rohrstutzens 11 bestehen und ist im übrigen in analoger Weise auch beim ersten Ausführungsbeispiel gemäß Fig. 4 vorgesehen.

Nachdem der Ventilstopfen 81 in der Anbohrschelle 80 eingeschraubt worden ist, kann nachträglich, benutzerseitig, eine Verkapselung der Anbohrschelle 80 vorgenommen werden, wie sie schon im Zusammenhang mit der Ventilanbohrschelle 77 von Fig. 7 beschrieben worden ist. Im vorliegenden Fall wird eine zum Ausführungsbeispiel von Fig. 5 analoge Abdeckhaube 60′ verwendet, deren Aussehen aus dem Längsschnitt von Fig. 13 und deren Benutzung in Fig. 15 verdeutlicht sind. Wegen des analogen Aufbaus werden bei der Abdeckhaube 60′ die gleichen Bezugszeichen wie bei der bereits im Zusammenhang mit Fig. 5 beschriebenen Abdeckhaube 60 des ersten Ausführungsbeispiels verwendet, weshalb insoweit die bisherige Beschreibung gilt. Es genügt, lediglich auf die Unterschiede einzugehen.

Die Abdeckhaube 60′ umfaßt, ausgehend von ihrer Haubenöffnung 66, zunächst die bereits beschriebene anschweißbare Haubenrandzone 61, welcher eine den axial herausragenden Kopfabschnitt 21 ummantelnde Haubenmittelzone 62 folgt. Diese geht, ebenfalls über eine Stufe 65, in einen gegenüber dem ersten Ausführungsbeispiel axial kürzere Haubenkuppe 63′ über. Im Bereich der Stufe 65 ist im Inneren der Haubenkuppe 63′ wieder eine unrunde Aufnahme 68 ausgebildet, die ebenfalls ein negatives Mutternprofil aufweist. Im Scheitelbereich dieser Haubenkuppe 63′ befindet sich jetzt aber ein geschlossener Haubenboden 85.

In dem aus Fig. 15 ersichtlichen Montagefall, wenn die Abdeckhaube 60′ mit ihrer Haubenrandzone 61 an dem abgesetzten, aus Fig. 14 ersichtlichen Umfangsbereich 57 des Rohrstutzens 11 festgeschweißt worden ist, hintergreift ihre abgesetzte Stufe 65 den Randbereich um die zentrale Sechskanthandhabe 83. Die zugehörige Haubenkuppe 63′ ist, entsprechend der Bauhöhe dieser Sechskanthandhabe 83, in sich gestuft und erzeugt einen aus Fig. 13 ersichtlichen Innenabsatz 86, der sich an einer komplementären Umfangsstufung 87 am oberen Stirnende der Sechskanthandhabe 83 abstützt. Der Haubenboden 85 überdeckt die äußere Stirnfläche an der abgesetzten Handhabe 83.

Fig. 16 zeigt in einer zu Fig. 14 analogen Darstellung die bereits oben erwähnte zweite Ausführungsform einer solchen Anbohrschelle 80′. Diese ist im wesentlichen analog zur vorbeschriebenen Anbohrschelle 80 gestaltet, weshalb insoweit die bisherige Beschreibung gilt. Der Unterschied besteht lediglich darin, daß anstelle des in Fig. 11 gezeigten Metalleinsatzes 90 die alternative Ausführung 90′ gemäß Fig. 12 verwendet wird. Hier ist zwar der Fußbereich 22′ analog mit einem Kranz von Radialdurchbrüchen 28 versehen, doch besitzt der Kopfabschnitt 21′ jetzt einen Aufbau, wie er bereits im Zusammenhang mit Fig. 8 bei der dortigen Ventilanbohrschelle 77′ beschrieben worden ist. Der Kopfabschnitt 21′ des Metalleinsatzes 90′ besitzt an seiner Umfangsfläche ein Außengewinde 70, welches zum Anschluß von Funktionsteilen dienlich ist. In der fertigen Anbohrschelle 80′ von Fig. 16 ragt der Metalleinsatz 90′ mit seinem Kopfabschnitt 21′ in der bereits mehrfach beschriebenen Weise axial heraus und ist daher einer bequemen Handhabung zugänglich.

## Patentansprüche

1. Rohrschelle, insbesondere Anbohrschelle (77, 80), zum Anbohren und Verschließen von aus Kunststoff bestehenden Versorgungsleitungen (40) für unter Druck stehende Medien, wie Gas, Wasser od. dgl.,
mit einer oberen Schellenoberschale (10) aus Kunststoff, die einen einstückigen Rohrstutzen (11) aufweist und an der gewünschten Stelle (41) der Versorgungsleitung (40) anschweißbar (19) ist,
und mit einem koaxialen, rohrförmigen Metalleinsatz im Rohrstutzen (11), der Anschlußelemente (31) aufweist, wie ein vom Rohrinneren aus zugängliches Innengewinde (31), zum Anschluß von wählbaren Funktionsteilen, wie eines Verschlußstopfens (81), eines Anbohrgerätes (72), eines Ventilglieds (50) od. dgl.,
**dadurch gekennzeichnet,**
daß der einstückige Metalleinsatz (20) in zwei form- und wirkunterschiedliche Axialabschnitte (21, 22) gegliedert ist, nämlich einen sämtliche Anschlußelemente (31; 32) für die Funktionsteile (81; 72, 50) aufweisenden Kopfabschnitt (21) und einen von solchen Anschlußelementen (31; 32) freien Fußabschnitt (22; 22′),
wobei nur der Fußabschnitt (22; 22′) inmitten der Rohrwand des Rohrstutzens (11) im Kunststoffmaterial (16) eingebettet ist und eine Armierungshülse des Rohrstutzens (11) bildet,
während der Kopfabschnitt (21) aus dem Stirnende (17) des Rohrstutzens (11) frei herausragt und seine Anschlußelemente (31) außerhalb des Rohrstutzens (11) positioniert.

2. Rohrschelle nach Anspruch 1, dadurch gekennzeichnet, daß der Kopfabschnitt (21) des Metalleinsatzes (20) eine gegenüber dem Fußstück (22) verdickte Wandstärke (23) aufweist und am Übergang zum Fußabschnitt (22) einen hinterschnittenen Absatz (27) bildet, der auf dem freien Stirnende (17) des Rohrstutzens (11) aufsitzt.

3. Rohrschelle nach Anspruch 1 oder 2, dadurch gekennzeichnet, daß der Fußabschnitt (22, 22′) vorzugsweise in einer gemeinsamen Axialzone (25, 26) angeordnete Radialdurchbrüche (28) aufweist, die der Kunststoff (16) des Rohrstutzens (11) durchsetzt.

4. Rohrschelle nach einem oder mehreren der Ansprüche 1 bis 3, dadurch gekennzeichnet, daß der Fußabschnitt (22, 22′) nach innen und/oder außen weisende Radialvorsprünge (33, 33′) aufweist.

5. Rohrschelle nach einem der Ansprüche 1 bis 4, dadurch gekennzeichnet, daß ein vom Radialvorsprung (33, 33′) gebildeter, ringförmiger Innenbund (33) am Innenende (34) des Fußabschnitts (22) sitzt und im Kunststoff der Ventilanbohrschelle (77) eingebettet ist.

6. Rohrschelle nach einem oder mehreren der Ansprüche 1 bis 5, dadurch gekennzeichnet, daß die Rohrschelle (77) ein einstückig mit dem Rohrstutzen ausgebildetes T-Rohrstück (12) aufweist, das einen seitlichen Rohrabgang (13) zur Abzweigung einer daran anschließbaren Hausanschlußleitung besitzt.

7. Rohrschelle nach Anspruch 6, dadurch gekennzeichnet, daß der Rohrabgang (13) eine Anschlußmuffe (44) mit einem elektrischen Heizleiter (56) aufweist zur Schweißverbindung eines eingesteckten Rohrendes der schweißfähigen, aus Kunststoff bestehenden Hausanschlußleitung.

8. Rohrschelle nach einem oder mehreren der Ansprüche 1 bis 7, dadurch gekennzeichnet, daß der radiale Innenbund (33) des Fußabschnitts (22) die als Ventilsitz (37) dienende Ringzone im Inneren des T-Rohrstücks (12) verstärkt.

9. Rohrschelle nach einem oder mehreren der Ansprüche 1 bis 8, dadurch gekennzeichnet, daß die der Versorgungsleitung (40) zugekehrte Innenfläche (15) der Schellenoberschale (10) mindestens einen elektrischen Heizleiter (19) aufweist, der zur Schweißverbindung der Anbohrschelle (77) an der Versorgungsleitung (40) dient.

10. Rohrschelle nach Anspruch 9, dadurch gekennzeichnet, daß die beiden Leitungsenden (47, 48) der Heizspirale (19) des Heizleiters radial zum abgehenden zentralen Rohrstutzen (11) bzw. T-Rohrstück (12) in der Schellenoberschale (10) verlaufen und in zwei elektrischen Kontaktstellen (46) zum Anschluß eines elektrischen Schweißgerätes enden, die beidseitig des Rohrstutzens (11) bzw. T-Rohrstücks (12) an den einander gegenüberliegenden zylindrischen Endbereichen (45) der Oberschale (10) sich befinden.

11. Rohrschelle nach einem oder mehreren der Ansprüche 1 bis 10, dadurch gekennzeichnet, daß zur Verkapselung der in der Rohrschelle montierten Funktionsteile eine Abdeckhaube (60, 60′) aus Kunststoff der Rohrschelle (77, 80) zugeordnet ist, die den axial am Stirnende (17) des Rohrstutzens (11) bzw. T-Rohr-Stücks (12) herausragenden Kopfabschnitt (21) ummantelt, mit ihrer die Haubenöffnung (66) umschließenden Randzone (Haubenrandzone 61) den angrenzenden Umfangsbereich (57) des Rohrstutzens (11) bzw. T-Rohrstücks (12) übergreift und dort anschweißbar (67) ist.

12. Rohrschelle nach Anspruch 11, dadurch gekennzeichnet, daß die Haubenrandzone (61) mit einem elektrischen Heizleiter (67) versehen ist, der zur Schweißverbindung der Abdeckhaube (60, 60′) an der Rohrschelle (77, 80) dient.

13. Rohrschelle nach Anspruch 11 oder 12, dadurch gekennzeichnet, daß die Abdeckhaube (60, 60′) zwar überwiegend rotationssymmetrisch, aber abschnittweise in sich gestuft ausgebildet (65) ist, umfassend die Haubenrandzone (61) mit großer lichter Weite, eine demgegenüber radial abgesetzte Haubenmittelzone (62) im Bereich des Kopfabschnitts (21) der Rohrschelle (77, 80), und schließlich eine vor der oberen Endfläche (69, 85) dieses Kopfabschnitts (21) liegende Haubenkuppe (63, 63′).

14. Rohrschelle nach Anspruch 13, dadurch gekennzeichnet, daß die Haubenkuppe (60′) geschlossen (85) ist, ggf. ein verkröpftes Axialprofil aufweist und sich wenigstens stellenweise am im Kopfabschnitt (21) der Rohrschelle (80) sitzenden Funktionsteil, wie einem Verschlußstopfen (81), abstützt, (vergl. Fig. 15).

15. Rohrschelle nach Anspruch 13, dadurch gekennzeichnet, daß die Haubenkuppe (63) in ihrem Scheitelbereich einen Axialdurchbruch (64) aufweist und eine Abschlußblende (69) erzeugt, deren Blendenöffnung (64) im Montagefall zur Durchführung eines Betätigungsendes (55) der im Kopfabschnitt (21) angeschlossenen Funktionsteile (50, 72) dient, wie der Drehhandhabe (55) eines Ventilglieds (50), eines Anbohrglieds (72) od. dgl., (vergl. Fig. 5, 10).

16. Rohrschelle nach Anspruch 15, dadurch gekennzeichnet, daß in der profilierten Blendenöffnung (64) der Haubenkuppe (61) ein Dichtungsring sitzt, der sich am durchgeführten Betätigungsende (55) des Funktionsteils (50, 72) abdichtend anlegt.

17. Rohrschelle nach einem oder mehreren der Ansprüche 11 bis 16, dadurch gekennzeichnet, daß die Abdeckhaube (60, 60′) im Haubeninneren eine unrunde Aufnahme (68) für eine Sechskanthandhabe (58) od. dgl. am Betätigungsende des eingeschraubten Funktionsteils (50, 72) besitzt, (vergl. Fig. 5, 13).

## Claims

1. A pipe clip, in particular a tapping pipe clip (77, 80), for tapping and sealing plastic supply ducts (40) for pressurised media, such as gas, water and similar,
with a top clip upper shell (10) made of plastic which exhibits a single-piece pipe nozzle (11) and which can be welded onto the desired location (41) of the supply duct (40),
and with a coaxial, tubular metal insert in the pipe nozzle (11) which has connecting elements (31), like a tapping (31) accessible from the pipe interior, for the connection of selectable functional components, such as a sealing plug (81), a tapping machine (72), a valve member (50) or similar,
characterised in that
the single-piece metal insert (20) is divided into two axial sections (21, 22) having different shapes and functions, namely a head section (21) exhibiting all the connecting elements (31, 32) for the functional components (81, 72, 50) and a foot section (22, 22′) which has no such connecting elements (31, 32),
whereby only the foot section (22, 22′) is embedded into the pipe wall of the pipe nozzle (11) in the plastic material (16) and forms a reinforcing sleeve of the pipe nozzle (11),
whereas the head section (21) freely projects out of the front end (17) of the pipe nozzle (11) and positions its connecting elements (31) outside the pipe nozzle (11).

2. A pipe clip according to claim 1, characterised in that the head section (21) of the metal insert (20) has a greater wall thickness (23) than the foot section (22) and at the transition point to the foot section (22) forms a back-cut shoulder (27) which sits on the free front end (17) of the pipe nozzle (11).

3. A pipe clip according to claim 1 or 2, characterised in that the foot section (22, 22′) has radial openings (28) preferably arranged in a common axial zone (25, 26), said openings being interspersed by the plastic (16) of the pipe nozzle (11).

4. A pipe clip according to one or more of claims 1 to 3, characterised in that the foot section (22, 22′) has radial projections (33, 33′) facing inwards and/or outwards.

5. A pipe clip according to one of claims 1 to 4, characterised in that an annular inner collar (33) formed by the radial projection (33, 33′) rests on the inside end (34) of the foot section (22) and is embedded in the plastic of the valve tapping clip (77).

6. A pipe clip according to one or more of claims 1 to 5, characterised in that the pipe clip (77) has a T-piece (12) designed with the pipe nozzle to form one component, said T-piece having a side pipe outlet (13) for branching off house connection duct which can be connected to it.

7. A pipe clip according to claim 6, characterised in that the pipe outlet (13) has a connection sleeve (44) with an electric heat conductor (56) for the welding on an inserted pipe end of the weldable plastic house connection duct.

8. A pipe clip according to one or more of claims 1 to 7, characterised in that the radial inner collar (33) of the foot section (22) reinforces the annular zone serving as a valve seat (37) inside the T-piece (12).

9. A pipe clip according to one or more of claims 1 to 8, characterised in that the inside surface (15) of the clip upper shell (10) facing the supply duct (40) has at least one electric heat conductor (19) which serves to weld the tapping clip (77) to the supply duct (40).

10. A pipe clip according to claim 9, characterised in that the two duct ends (47, 48) of the heating coil (19) of the heat conductor run radially to the outgoing central pipe nozzle (11) and T-piece (12) in the clip upper shell (10) and end in two electric contact points (46) for connecting an electric welding machine, said contact points being located on both sides of the pipe nozzle (11) and T-piece (12) on the cylindrical end sections (45) of the upper shell (10) opposite each other.

11. A pipe clip according to one or more of claims 1 to 10, characterised in that, in order to encapsulate the functional components mounted in the pipe clip, the pipe clip (77, 80) has a plastic cap (60, 60′) which envelopes the head section (21) protruding axially at the front end (17) of the pipe nozzle (11) or T-piece (12), and with its edge zone which surrounds the cap opening (66) (hood edge zone 61), protrudes over the adjacent circumferential section (57) of the pipe nozzle (11) or T-piece (12) and which can be welded on there (67).

12. A pipe clip according to claim 11, characterised in that the cap edge zone (61) is provided with an electric heat conductor (67) which serves to weld the cap (60, 60′) onto the pipe clip (77, 80).

13. A pipe clip according to claim 11 or 12, characterised in that the cap (60, 60′) is predominantly rotationally symmetrical but in sections has a stepped design (65), comprising the cap edge zone (61) with a large clear width, a cap central zone (62) radially stepped in relation to said zone in the area of the head section (21) of the pipe clip (77, 80) and finally a cover cap (63, 63′) positioned in front of the top end surface (69, 85) of this head section (21).

14. A pipe clip according to claim 13, characterised in that the cap (60′) is closed (85), optionally has a right-angled axial profile and rests at least in sections on the functional component, such as a sealing plug (81), sitting in the head section (21) of the pipe clip (80) (cf. Fig. 15).

15. A pipe clip according to claim 13, characterised in that the cover cap (63) has in its apex area an axial opening (64) and creates an end cover whose opening (64), in the assembled state, serves to lead through an activation end (55) of the functional components (50, 72) connected in the head section (21), such as the rotary handle (55) of a valve member (50), a tapping machine (72) or similar (cf. Fig. 5, 10).

16. A pipe clip according to claim 15, characterised in that in the profiled cover opening (64) of the cap (61) there is a sealing ring which rests and seals on the introduced activation end (55) of the functional component (50 72).

17. A pipe clip according to one or more of claims 11 to 16, characterised in that the cap (60, 60′) has in the cap interior a non-circular receiver (68) for a hexagonal handle (58) or similar on the activation end of the screwed-in functional component (50, 72) (cf. Fig. 5, 13).

## Revendications

1. Collier pour tuyaux, notamment collier perce-tuyaux (77, 80), pour percer et obturer des conduites d'alimentation en plastique (40) déjà en place destinées à des fluides sous pression tels que gaz, eau ou assimilés,
avec une coquille supérieure (10) en plastique qui présente un manchon monobloc (11) de tuyau et qui est soudable (19) à l'endroit voulu (41) de la conduite d'alimentation (40),
et avec un insert métallique coaxial tubulaire dans le manchon (11) qui présente des éléments de liaison (31) tels qu'un taraudage intérieur (31) accessible depuis l'intérieur du tuyau et permettant de brancher des pièces fonctionnelles sélectables telles qu'un bouchon d'obturation (81), un appareil perce-tuyaux (72), une vanne (50) ou assimilés,
**caractérisé en ce que**
l'insert métallique monobloc (20) est articulé en deux sections axiales (21, 22) de formes et d'action différentes, à savoir en une section sommitale (21) présentant tous les éléments de branchement (31; 32) des pièces fonctionnelles (81; 72, 50) et en une section de base (22; 22′) ne présentant pas de tels éléments de branchement (31; 32),
seule la section de base (22; 22′) étant noyée dans le matériau plastique (16) au milieu de la paroi du manchon du tuyau (11) et formant une douille-armature du manchon de tuyau (11),
tandis que la section sommitale (21) saillit librement hors de l'extrémité frontale (17) du manchon de tuyau (11) et positionne ses éléments de branchement (31) en dehors du manchon (11).

2. Collier pour tuyaux selon la revendication 1, caractérisé en ce que la section sommitale (21) de l'insert métallique (20) présente une paroi (23) épaissie comparée à la pièce de base (22) et forme dans la zone de transition vers la section de base (22) un gradin dépouillé (27) en assise sur l'extrémité frontale libre (17) du manchon de tuyau (11).

3. Collier pour tuyaux selon la revendication 1 ou 2, caractérisé en ce que la section de base (22, 22′) présente des perforations radiales (28) disposées de préférence selon une zone axiale commune (25, 26), qui traverse la matière plastique (16) du manchon de tuyau (11).

4. Collier pour tuyaux selon l'une ou plusieurs des revendications 1 à 3, caractérisé en ce que la section de base (22, 22′) présente des saillies radiales (33, 33′) regardant vers l'intérieur et/ou vers l'extérieur.

5. Collier pour tuyaux selon l'une ou plusieurs des revendications 1 à 4, caractérisé en ce qu'un collet (33) intérieur annulaire formé par la saillie radiale (33, 33′) applique contre l'extrémité intérieure (34) de la section de base (22) et est noyé dans le plastique du collier de perçage pour vanne (77).

6. Collier pour tuyaux selon l'une ou plusieurs des revendications 1 à 5, caractérisé en ce que le collier pour tuyaux (77) présente une pièce-tuyau (12) en forme de T formée monobloc avec le manchon de tuyau, laquelle (12) comporte une sortie tubulaire latérale (13) permettant la bifurcation d'une conduite de branchement domestique raccordable à cette sortie.

7. Collier pour tuyaux selon la revendication 6, caractérisé en ce que la sortie tubulaire (13) présente un manchon de branchement (44) à conducteur chauffant électrique (56) permettant la liaison par soudage d'une extrémité enfichée de la conduite, en plastique soudable, de branchement domestique.

8. Collier pour tuyaux selon l'une ou plusieurs des revendications 1 à 7, caractérisé en ce que le collet radial intérieur (33) de la section de base (22) renforce la zone annulaire servant de siège de vanne (37) à l'intérieur de la pièce-tuyau (12) en forme de T.

9. Collier pour tuyaux selon l'une ou plusieurs des revendications 1 à 8, caractérisé en ce que la surface intérieure (15) de la coquille supérieure de collier (10) tournée (15) vers la conduite d'alimentation (40) présente au moins un conducteur chauffant électrique (19) permettant la liaison par soudage du collier perce-tuyaux (77) contre la conduite d'alimentation (40).

10. Collier pour tuyaux selon la revendication 9, caractérisé en ce que les deux extrémités filaires (47, 48) de la spirale (19) du conducteur chauffant ont un tracé radial par rapport au manchon central (11) de tuyau sortant et à la pièce en T (12) dans la coquille supérieure de collier (10) et se terminent par deux points de contact électrique (46) servant au branchement d'un appareil de soudage électrique et se trouvant des deux côtés du manchon de tuyau (11) et de la pièce en T (12) contre les zones terminales cylindriques (45), se faisant réciproquement face, de la coquille supérieure (10).

11. Collier pour tuyaux selon l'une ou plusieurs des revendications 1 à 10, caractérisé en ce que pour carapaçonner les pièces fonctionnelles montées dans le collier pour tuyaux, un capot (60, 60′) en plastique est affecté au collier pour tuyaux (77, 80), et enveloppe la section sommitale (21) faisant saillie axialement à l'extrémité frontale (17) du manchon de tuyau (11) et de la pièce en T (12), et atteint par sa zone marginale (zone marginale du capot 61) enveloppant l'orifice du capot (66) la zone circonférentielle limitrophe (57) du manchon de tuyau (11) et de la pièce en T (12) et y est soudable (67).

12. Collier pour tuyaux selon la revendication 11, caractérisé en ce que la zone marginale (61) du capot est équipée d'un conducteur chauffant électrique (67) servant à établir par soudage la liaison entre le capot (60, 60′) et le collier pour tuyaux (77, 80).

13. Collier pour tuyaux selon la revendication 11 ou 12, caractérisé en ce que le capot (60, 60′) est conformé certes principalement à symétrie de révolution mais également en segments graduellement échelonnés (65), englobant la zone marginale du capot (61) avec une grande largeur libre, une zone médiane (62) à étagement radial située dans la zone sommitale (21) du collier pour tuyaux (77, 80) et enfin une tête de capot (63, 63′) située avant la surface finale supérieure (69, 85) de cette section sommitale (21).

14. Collier pour tuyaux selon la revendication 13, caractérisé en ce que la tête de capot (60′) est fermée (85), qu'elle présente le cas échéant un profil axial à courbure et s'appuie au moins localement contre la pièce fonctionnelle, telle un bouchon d'obturation (81), en assise dans la section sommitale (21) du collier pour tuyaux (80) (cf. la fig. 15).

15. Collier pour tuyaux selon la revendication 13, caractérisé en ce que la tête de capot (63) présente en sa zone médiane une perforation axiale (64) et génère un cache terminal (69) dont l'ouverture (64) sert, en cas de montage, à faire passer l'extrémité d'actionnement (55) des pièces fonctionnelles (50, 72) branchées dans la zone sommitale (21), telle (55) le moyeu de rotation manuelle (55) d'une vanne (50), d'un organe de perçage (72) ou assimilé (cf. les fig. 5, 10).

16. Collier pour tuyaux selon la revendication 15, caractérisé en ce que dans l'ouverture profilée (64) du cache de la tête de capot (61) se trouve une bague d'étanchéité s'appliquant contre l'extrémité traversante d'actionnement (55) d'une pièce fonctionnelle (50, 72) et étanchant celle-ci (55).

17. Collier pour tuyaux selon l'une ou plusieurs des revendications 11 à 16, caractérisé en ce que le capot (60, 60′) possède à l'intérieur un logement en faux-rond (68) recevant une manette hexagonale (58) ou assimilée à l'extrémité d'actionnement de la pièce fonctionnelle (50, 72) vissée à l'intérieur (cf. les fig. 5, 13).
